(19) Europäisches Patentamt
European Patent Office
Office européen des brevets

(11) **EP 2 987 701 B1**

(12) **EUROPEAN PATENT SPECIFICATION**

(45) Date of publication and mention
of the grant of the patent:
**11.10.2017 Bulletin 2017/41**

(51) Int Cl.:
***B62D 6/00*** *(2006.01)*   ***B62D 15/02*** *(2006.01)*

(21) Application number: **14181925.0**

(22) Date of filing: **22.08.2014**

(54) **Precise closed loop control of road wheel angle res. Steering wheel angle by electric power steering system**

Präzise Steuerung mit geschlossenem Regelkreises einer Laufradeinschlagwinkelrücksetzung Lenkradwinkel durch eine elektrische Servolenkung

Commande en boucle fermée précise de résolution d'angle de roue porteuse Angle de volant par un système de direction assistée électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2016 Bulletin 2016/08**

(73) Proprietor: **Ford Global Technologies, LLC Dearborn, MI 48126 (US)**

(72) Inventors:
• **Shah, Jitendra**
  **52072 Aachen (DE)**
• **Lakehal-ayat, Mohsen**
  **52072 Aachen (DE)**
• **Benmimoun, Ahmed**
  **52074 Aachen (DE)**
• **Fan, Jiezhi**
  **52064 Aachen (DE)**

(74) Representative: **Illing, Rolf**
  **Ford-Werke GmbH**
  **Patentabteilung NH-364**
  **Henry-Ford-Straße 1**
  **50735 Köln (DE)**

(56) References cited:
**EP-A1- 2 752 357     DE-A1- 19 738 161**

EP 2 987 701 B1

**Description**

The present invention relates in general to a method to control the steering of a vehicle steering system having at least an electric power steering system.

EP 2 752 357 A1 discloses a vehicle drive control device which executes trajectory control in which steered wheels are controlled so as to make the vehicle travel along a target trajectory. EP 2 752 357 A1 further discloses, that when the possibility exists, that the travel direction of the vehicle may be changed by said trajectory control, that at least one of an operation position of a steering input means operated by a driver, a yaw angle of the vehicle and a lateral position of the vehicle with respect to lane is changed before a change in the travel direction is made.

Road vehicles are increasingly equipped with driver assistance systems. Highly active systems now allow the development of automated or even driverless or autonomous road vehicles. The potential advantages particularly in the use of automated vehicles can be for example fewer traffic collisions and the ability to better traffic flow. Basically the reason for this is increased reliability and faster reaction time of the assistance systems compared to human drivers. Besides the vehicle passengers, especially then driver can be relieved at least temporarily from driving and navigation activities.

A robust road wheel angle control of an automated vehicle is an essential. A prerequisite for constructing an automated vehicle is also to implement an electric power steering system. Electric power steering systems are well known in the state of the art, for example as Electric Power Assisted Steering (EPAS). These are designed to act with an assist torque on the steering. At the moment steering system provides a dual torque interface, i.e Type 1 and Type 2 for example. Firstly additional steering torque - requested by a controller - gets amplified by a "boost curve" (type-1) and secondly the assist torque is generated by the electric power steering system (type-2) without any amplification by a "boost curve". For example, when the driver request type-1 torque of 2,0 Nm it can become 20,0 Nm based on boosting by a motor of the electric steering system. For example, lane departure warning uses the type-2 torque interface. Steering assist uses the type-1 torque interface. This means, that additional steering torque, requested by the controller, gets amplified by the boost curve and assists torque is generated by the electric power steering system. So, the controller shall have the inverse boost curve modelled completely. But, only static part of the boost can be inversed and not the high frequency part. So, a precise control of road wheel angle is not achievable.

It is therefore an object of the present invention to provide an improved method to control the steering of a vehicle steering system having at least an electric power steering system with a precise control of road wheel angle.

According to the invention said object is solved by a method comprising the features of claim 1.

According to the present invention there is provided a method to control the steering of a vehicle steering system having at least an electric power steering system comprising at least the steps of:

Determining of a smooth reference assist torque on base of the vehicle velocity and reference lateral acceleration,
Tuning a desired angle gain, wherein the angle gain is defined by an error between a reference steering angle and a measured steering angle,
Measuring assist torque,
Tuning a desired assist gain, wherein the desired angle gain is tuned by comparing a reference steering wheel angle with an actually measured road wheel angle, whereby an error between both is fed as desired angle gain to an integrator to determine a reference assist torque,
Adding the smooth reference assist torque to a reference assist torque to develop a total reference torque, said reference assist torque being developed by feeding said desired angle gain to an integrator,
Comparing said measured assist torque to said total reference torque to develop a torque error,
Feeding said torque error to an integrator to generate a desired steering wheel torque, and
Input said desired steering wheel torque to said electric power steering system.

It is well known, that there is no direct and linear relation between steering wheel angle and steering wheel torque. However the relationship between lateral acceleration and steering wheel torque is quite good. The reference road wheel angle can't be requested directly because of the fact, that the interface to the steering system is only the steering torque. Therefor it is in the sense of the invention, when the requested road wheel angle generated from the controller is implemented by electric power assist motor.

It is in the sense of the invention, that the term "road wheel angle" is in similar understanding to the term "steering wheel angle". In an electric power steering system the steering wheel angle and the road wheel angle is different by a steering ratio. When EPAS applies torque it moves road wheel angle as well as steering wheel angle.

In vehicle dynamics, all the calculation is done at road wheel angle. The single track model is also based on road wheel angle. For autonomous driving the controller generates required road wheel angle for driving and later it changed to steering wheel angle because road wheel angle can't be measured directly. The steering system has at least one steering wheel angle sensor and it measures steering wheel angle. The core controller calculates road wheel angle and it is changed to steering wheel angle by ratio.

But the steering ECU does not accept reference steering wheel angle or reference road wheel angle. Steering ECU only accepts steering wheel torque request as input. Therefor if steering wheel angle/road wheel angle is to be implemented it is in the sense of the invention to proceed this by requested steering wheel torque. The steering wheel torque will be implemented by the assist motor/belt drive system.

As stated above that road wheel angle and steering wheel angle is different by a ratio. To be more precise, the ratio changes over the full range of steering wheel angle due to nonlinearity in the suspension kinematics. It will be stated later, that there is a difference between reference steering wheel angle and measured steering wheel angle.

When desired road wheel angle is available it is quite easy to find desired lateral acceleration at particular velocity. According to the invention, this relationship will be target oriented used as feed-forward path for road wheel angle control system.

Due to the non-linear nature of assist provided by the steering assist system, a nonlinear approach will be considered. It is well known in the art that steering boost function is a monotonic function of hand wheel torque,

$$T_{assist} = f(T_{bar}) \qquad (1)$$

But, in an autonomous steering scenario the $T_{bar}$ sensor signal is not available, as the driver is not applying any torque on the hand wheel. The above equation therefore has to be solved to find a suitable torsion bar torque. The equation can be solved by inverting the quasi-static $f(T_{bar})$. The inversion of $f(T_{bar})$ is difficult to obtain and is subject to modelling errors. So according to an aspect of the invention a dynamic inversion method is adopted.

$$T_{assist} - f(T_{bar}) = 0 \quad (2)$$

Differentiating the above equation, will get

$$\dot{T}_{assist} - \left(\frac{\partial f}{\partial T_{bar}}\right)\dot{T}_{bar} = 0 \qquad (3)$$

Assuming

$$u = \dot{T}_{bar}$$

Then

$$\dot{T}_{assist} = \frac{\partial f}{\partial T_{bar}} u \,(4)$$

The measured assist torque needs to converge to the desired assist torque when the following control law is fulfilled,

$$u = -k_{assist}(T_{assist} - \bar{T}_{assist}) \text{ under the condition } k_{assist}\left(\frac{\partial f}{\partial T_{bar}}\right) > 0 \qquad (5)$$

The equations present the basic idea of the control loop. The main branch of the control loop is defined by the following equation: $u = -k_{assist}(T_{assist} - \bar{T}_{assist})$. The additional control branch is added to get a smooth response of the assist torque with good tracking of the reference. Therefor dynamic inversion is the term used to explain the applied method for solving the nonlinear problem. To explain the concept, The following simple example shall explain the concept in the sense of the invention: Solve the following nonlinear function f(x)=0. This problem can be solved analytically if the inverse of the function exists and expressed in analytical form. Unfortunately , this is not always the case due to the hard mathematical nonlinearities of the function. Another way is to solve the problem numerically - write the table which contains all possible values of x and f(x). By reversing the table, we can give a numerical value for x which makes f(x)=0.

Therefor dynamic inversion is an iterative method but simple. The appropriate inventional way is to update the state x iteratively step after step until the f(x) is reduced to zero.

The complete implementation consists of feed forward and feedback loops. The feed forward map of assist torque is derived by driving a test car at different speeds while increasing steering slowly in one direction until 1g lateral acceleration is achieved. This is repeated for different vehicle velocities. The resulting 2D map provides the control system with very good information on the feed forward path.

Advantageously with the invention a correct EPAS torque input is determined which would beneficially create the desired steering angle which helps steering the vehicle on the right trajectory.

According to an aspect of the invention, a lane change should be achieved by automated steering. For this a reference of the steering angle is calculated from the desired lane change trajectory. The error between the measured steering wheel angle and the reference steering wheel angle is fed to an integrator for the calculation of the reference assist torque. A smoothing reference assist torque is added to said reference assist torque, developing a total reference assist torque. Said smooth reference is calculated from the vehicle velocity and lateral acceleration reference.

The total reference assist torque is compared to the measured assist torque measured by the sensor on the column. According to an aspect of the invention a torque error is determined by said comparison. This torque error is fed to the integrator to calculate the input request to the EPAS (steering) system. It is in the sense of the invention to reduce the torque error to zero. It will be seen, that the required reference torque to achieve the required steering angle is not constant The smoothing tracking of the reference assist torque is achieved by the inventional controller without the need of the implementation of the inverse torque map.

Therefor the inventional procedure is to calculate a proper assist torque to reach the desired steering wheel angle, i.e. road wheel angle. By dynamic inversion the torque input to the EPAS is calculated using the error between the reference steering angle and the measured steering angle.

Further objects and advantages of the present invention will become more apparent from the following detailed description of a preferred embodiment shown in the accompanying drawings. This description should not be considered limiting in any way. With reference to the accompanying drawings:

FIG. 1     depicts a control block diagram of dynamic inversion with feed-forward and feedback loop, and

Fig. 2     depicts a simulation example of the inventional control approach, wherein Figure 2-1 shows the reference steering wheel angle and the measured steering wheel angle, wherein Figure 2-2 shows the reference assist torque and measured assist torque, wherein Figure 2-3 shows that angles from the Figure 2-1 generate the vehicle path.

A detailed description of one embodiment of the disclosed apparatus is presented herein by way of exemplification and not limitation with reference to the figure.

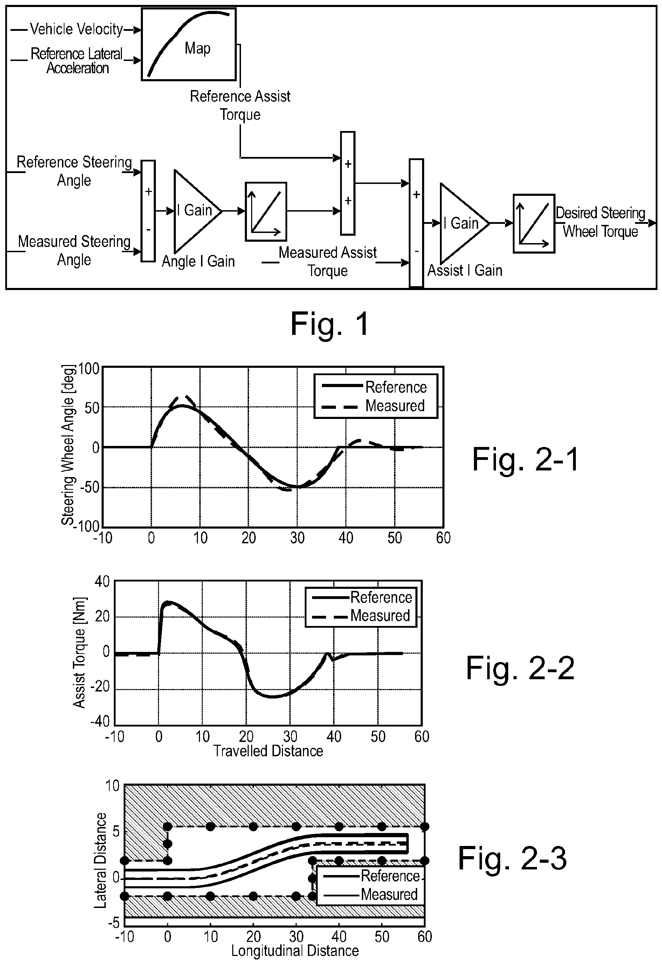

FIG. 1 shows a block diagram of dynamic inversion with feed-forward and feedback loop. The Block diagram of Fig. 1 is the representation of the control law given by equation (5). The block diagram presents the final architecture of the control loop. The above mentioned equations present the basic idea of the control loop. The main branch of the control loop is defined by the following equation: $u = -k_{assist}(T_{assist} - \overline{T}_{assist})$. The gain in the equation $k_{assist}$ is named "Assist I Gain" in the block diagram. The additional control branch is added to get a smooth response of the assist torque with good tracking of the reference.

First a smoothing Reference assist torque is determined by vehicle velocity and reference lateral acceleration fed to a mapblock.

A reference steering angle is compared to a measured steering angle, whereby an error between both is named " Angle I gain " in the block diagram. This error between the steering angle measured and steering angle reference is fed to an integrator for the determination of the reference assist torque. The smooth reference assist torque is added to the reference assist torque, could be called also as the base reference.

The total reference torque is compared to the actual measured assist torque by the sensor on the column. The torque error is fed to the integrator to calculate the input request to the EPAS (steering) system. The input request is called desired steering wheel torque in the block diagram. Appropriately the torque error is to reduce to zero.

Figure 2-1, 2-2, 2-3 are simulation example of the proposed control approach, whereby exemplary the performance of an autonomous single lane change manoeuvre at 70kph is shown. The objective of this example is to achieve a lane change by automatic steering. Figure 2-1 shows the reference steering wheel angle and the measured steering wheel angle. Figure 2-2 shows the reference assist torque and measured assist torque. The torque following by the system is extremely good. Figure 2-3 shows that angles from the Figure 2-1 generate the vehicle path. Figure 2-3 contains dotted line as boundary of the feasible area for moving the vehicle during a collision avoidance scenario. The reference and measured vehicle path just overlaps each other. The smooth tracking of the torque reference is achieved by the proposed, inventional controller without the need of the implementation of the inverse torque map. The method according to the invention is all about the determination of proper assist torque to reach the desired steering wheel angle res. the desired road wheel angle. The torque input to the EPAS is determined using the error between the reference steering wheel angle and the measured steering wheel angle - this is what is dynamic inversion in the sense of the invention.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation to the teachings of the invention without departing from the essential scope thereof. Therefore, it is intended that the invention not be limited to the particular embodiments disclosed as the best modes contemplated for carrying out this invention, but that the invention will include all embodiments falling within the scope of the claims.

**Claims**

1. A method to control the steering of a vehicle steering system having at least an electric power steering system comprising at least the steps of
   Determining of a smooth reference assist torque on base of the vehicle velocity and reference lateral acceleration,
   Tuning a desired angle gain, wherein the angle gain is defined by an error between a reference steering angle and a measured steering angle,
   Measuring assist torque,
   Tuning a desired assist gain, wherein the desired angle gain is tuned by comparing a reference steering wheel angle with an actually measured road wheel angle, whereby an error between both is fed as desired angle gain to an integrator to determine a reference assist torque,
   Adding the smooth reference assist torque to a reference assist torque to develop a total reference torque, said reference assist torque being developed by feeding said desired angle gain to an integrator,
   Comparing said measured assist torque to said total reference torque to develop a torque error,
   Feeding said torque error to an integrator to generate a desired steering wheel torque, and
   Input said desired steering wheel torque to said electric power steering system.

2. The method according to claim 1, wherein the electric power steering system is as electric power assisted steering System (EPAS).

**Patentansprüche**

1. Verfahren zur Steuerung des Lenkens einer Fahrzeuglenkung mit mindestens einer elektrischen Servolenkung, das mindestens die folgenden Schritte umfasst:

   Bestimmen eines gleichmäßigen Bezugsunterstützungsmoments basierend auf der Fahrzeuggeschwindigkeit und Bezugsquerbeschleunigung,
   Einstellen einer Sollwinkelverstärkung, wobei die Winkelverstärkung durch einen Fehler zwischen einem Bezugslenkwinkel und einem gemessenen Lenkwinkel definiert wird,
   Messen des Unterstützungsmoments,
   Einstellen einer Sollunterstützungsverstärkung, wobei die Sollwinkelverstärkung durch Vergleichen eines Bezugslenkradwinkels mit einem tatsächlich gemessenen Straßenradwinkel eingestellt wird, wodurch ein Fehler zwischen beiden als Sollwinkelverstärkung zu einem Integrator geführt wird, um ein Bezugsunterstützungsmoment zu bestimmen,
   Addieren des gleichmäßigen Bezugsunterstützungsmoments zu einem Bezugsunterstützungsmoment zum Erzeugen eines Gesamtbezugsmoments, wobei das Bezugsunterstützungsmoment durch Zuführen der Sollwinkelverstärkung zu einem Integrator erzeugt wird,
   Vergleichen des gemessenen Unterstützungsmoments mit dem Gesamtbezugsmoment zum Erzeugen eines Momentfehlers,
   Zuführen des Momentfehlers zu einem Integrator zum Erzeugen eines Solllenkradmoments und
   Eingeben des Solllenkradmoments in die elektrische Servolenkung.

2. Verfahren nach Anspruch 1, wobei die elektrische Servolenkung eine elektrische Hilfskraftlenkung (EPAS) ist.

**Revendications**

1. Procédé de commande de direction d'un système de direction de véhicule comportant au moins un système de direction électrique comprenant au moins les étapes suivantes :

   déterminer un couple d'assistance de référence lissé sur la base d'une vitesse et d'une accélération latérale de référence du véhicule,
   ajuster un gain d'angle souhaité, le gain d'angle étant défini par un écart entre un angle de braquage de référence et un angle de braquage mesuré,
   mesurer un couple d'assistance,
   ajuster un gain d'assistance souhaité, le gain d'angle souhaité étant ajusté en comparant un angle de volant de référence à un angle de roue sur route effectivement mesuré, un écart entre ces deux valeurs étant injecté en tant que gain d'angle souhaité dans un intégrateur afin déterminer un couple d'assistance de référence,
   ajouter le couple d'assistance de référence lissé à un couple d'assistance de référence afin de développer un couple de référence total, ledit couple d'assistance de référence étant développé en injectant ledit gain d'angle souhaité dans un intégrateur,
   comparer ledit couple d'assistance mesuré audit couple de référence total afin de développer un écart de couple,
   injecter ledit écart de couple dans un intégrateur afin de générer un couple de volant souhaité, et
   saisir ledit couple de volant souhaité dans ledit système de direction électrique.

2. Procédé selon la revendication 1, dans lequel le système de direction électrique est un système de direction à assistance électrique.

Fig. 1

Fig. 2-1

Fig. 2-2

Fig. 2-3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2752357 A1